Europäisches Patentamt

European Patent Office

Office européen des brevets

(19)

(11) Veröffentlichungsnummer: **0 512 383 A1**

## (12) EUROPÄISCHE PATENTANMELDUNG

(21) Anmeldenummer: **92107271.6**

(51) Int. Cl.5: **H01M 8/24**, H01M 8/12

(22) Anmeldetag: **29.04.92**

(30) Priorität: **04.05.91 DE 4114644**

(43) Veröffentlichungstag der Anmeldung:
**11.11.92 Patentblatt 92/46**

(84) Benannte Vertragsstaaten:
**CH DE DK FR GB IT LI NL SE**

(71) Anmelder: **ABB PATENT GmbH
Kallstadter Strasse 1
W-6800 Mannheim 31(DE)**

(72) Erfinder: **Rohr, Franz Josef, Dr.**

Forstweg 2
W-6941 Abtsteinach(DE)
Erfinder: **Belzner, Andreas, Dr.**
Langgewann 28
W-6900 Heidelberg(DE)
Erfinder: **Stadelmann, Heinz, Dr.**
Schulstrasse 12
W-7410 Reutlingen(DE)

(74) Vertreter: **Rupprecht, Klaus, Dipl.-Ing. et al**
c/o ABB Patent GmbH, Postfach 10 03 51
W-6800 Mannheim 1(DE)

(54) **Verfahren zur mechanischen Verbindung von Hochtemperaturbrennstoffzellen mit einem Brennstoffzellenträger.**

(57) Die Erfindung bezieht sich auf ein Verfahren zur Verbindung von vorgefertigten scheibenförmigen Brennstoffzellen (1) mit einem keramischen Brennstoffzellenträger (2). Es wird vorgeschlagen, auf den Brennstoffzellenträger mittels Siebdruck eine strukturierte Nickelschicht als Stromabgriff aufzutragen, auf die noch grüne Nickelschicht (91) die Brennstoffzellen aufzulegen und durch einen Sintervorgang mit dem Träger zu verbinden.

Fig.1

EP 0 512 383 A1

Die Erfindung bezieht sich auf ein Verfahren zur Herstellung einer gasdichten mechanischen Verbindung zwischen wenigstens einer vorgefertigten Brennstoffzelle, die eine Festelektrolytscheibe mit auf gegenüberliegenden Hauptflächen aufgebrachten Anoden- bzw. Kathoden-Elektroden aufweist, und einem keramischen Brennstoffzellenträger, auf den wenigstens eine Brennstoffzelle angeordnet ist.

Das Verfahren findet Anwendung im Bereich der Fertigung von Hochtemperaturbrennstoffzellenbatterien, deren Arbeitsweise unter anderem in der DE-OS 39 07 485 beschrieben ist. Für den Aufbau von Brennstoffzellenbatterien werden modulartige Brennstoffzellenanordnungen verwendet, die aus einem keramischen Träger mit darauf angeordneten Brennstoffzellen bestehen. Gemäß der nichtvorveröffentlichten Patentanmeldung P 40 11 506.2 können Brennstoffzellenanordnungen mit Hilfe von vorgefertigten Brennstoffzellen hergestellt werden, die durch Klebesinterung mit dem Träger verbunden werden. Als Klebemittel wird in der genannten Patentanmeldung ein poröses elektrisch leitendes Perowskitmischoxid vorgeschlagen, dessen begrenzte elektrische Leitfähigkeit jedoch bei manchen Anordnungen zu unbefriedigenden Ergebnissen führen kann.

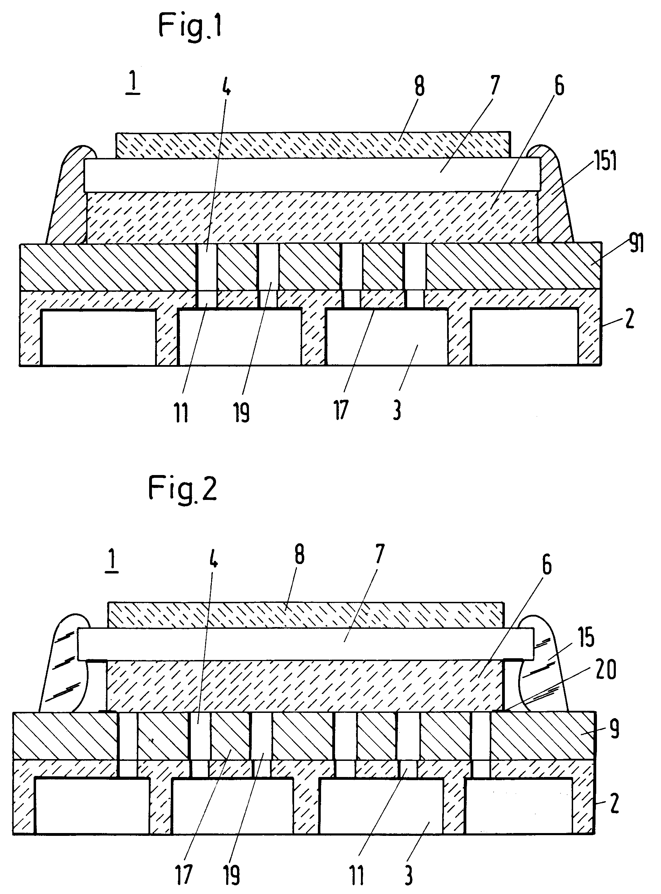

In der Praxis wird noch eine andere Methode zur Klebesinterung benutzt, die anhand einer in Figur 2 dargestellten Anordnung erläutert wird, und wobei eine Glaskeramik als Klebemittel benutzt wird. Die Figur 2 zeigt eine Brennstoffzellenanordnung 1 mit einem gasdichten keramischen Brennstoffzellenträger 2, der in der nichtvorveröffentlichten Patentanmeldung P 41 04 841.5 im einzelnen beschrieben ist. Der Träger 2 weist Hohlräume 3 zur Führung eines Reaktionsgases, z.B. Luft, auf, aus denen das Gas über Kanäle 11 zur Kathodenelektrode 6 gelangt. Die elektrische Leitfähigkeit der Kathodenelektrode 6 ist durch eine Verstärkerschicht 17 verbessert, die Zwischenräume 19 für einen Durchlaß des Gases zur Kathodenelektrode 6 aufweist. Auf den Träger 2 ist eine elektrisch leitende Verbindungsschicht 9 aufgebracht, die aus Nickel besteht und entsprechend der gewünschten elektrischen Verschaltung von Brennstoffzellen strukturiert ist.

Auf die als Stromabgriff dienende Verbindungsschicht 9 ist eine Glaskeramikschicht 20 gedruckt, die z.B. aus A5-Glaskeramik der Firma Schott besteht. Die Glaskeramikschicht 20 wird z.B. als 3mm breiter Rahmen gedruckt. Auf die noch grüne Glaskeramikschicht 19 wird zur Herstellung der Anordnung 1 die Brennstoffzelle 4 gelegt und anschließend gesintert, wobei während des Sintervorgangs, z.B. mit Hilfe eines aufgelegten Gewichts, ein mechanischer Druck auf die Brennstoffzelle ausgeübt wird. Zur Abdichtung gegenüber einem an der Anodenelektrode 8 vorbeigeführten Brenngas, z.B. Wasserstoff, kann ein Glasrand 15 vorgesehen werden, der den Rand der Kathodenelektrode 6 abdeckt, ohne ihn zu berühren. Die Kathode 6 und der wulstartige Glasrand 15 müssen voneinander beabstandet sein, weil das Glas- und das Kathodenmaterial chemisch miteinander unverträglich sind.

Das Bonden der Brennstoffzelle 4 mit der Glaskeramikschicht 20 kann zu thermischen Mißspannungen führen und zur Migration schmelzflüssiger Glasanteile in den mit der Verbindungsschicht 9 versehenen Träger 2. Dadurch kann es zu einer mechanischen Zerstörung der Brennstoffzelle oder des Trägers kommen.

Der Erfindung liegt die Aufgabe zugrunde, ein verbessertes Verfahren zur Verbindung von Brennstoffzellen mit einem keramischen Träger anzugeben.

Diese Aufgabe wird gelöst durch ein Verfahren zur Herstellung einer gasdichten mechanischen Verbindung zwischen wenigstens einer vorgefertigten Brennstoffzelle, die eine Festelektrolytscheibe mit auf gegenüberliegenden Hauptflächen aufgebrachten Anoden- bzw. Kathoden-Elektroden aufweist, und einem keramischen Brennstoffzellenträger, auf dem wenigstens eine Brennstoffzelle angeordnet ist, und das nachstehende Verfahrensschritte aufweist:

a) Aufbringen einer z.B. rahmenförmig strukturierten Nickelschicht auf den Brennstoffzellenträger mittels Siebdruck, wobei die Nickelschicht als Mittel zur mechanischen Verbindung der Brennstoffzelle mit dem Träger sowie zum Stromabgriff von der Kathodenelektrode und als Stromanschluß für eine elektrische Verschaltung mit weiteren Brennstoffzellen vorgesehen ist,

b) Auflegen der Brennstoffzelle auf die frischgedruckte Nickelschicht und

c) Sintern dieser Anordnung unter Aufbringung eines geringen mechanischen Drucks auf die Brennstoffzelle, wobei zunächst etwa 1 Stunde lang in Luft bei einer Temperatur von etwa 400°C und anschließend in einer Stickstoffatmosphäre bei einer Temperatur von etwa 1150°C gesintert wird.

Das erfindungsgemäße Verfahren hat den Vorteil, daß das als Bindemittel dienende Nickelmetall bei den angewandten Temperaturen noch keine schmelzflüssige Phase bildet. Das Bindemittel kann somit nicht in den Träger migrieren. Mechanische Spannungen durch unterschiedliche thermische Ausdehnung werden durch plastische Verformung des duktilen Bindemittels aufgefangen. Die als Bindemittel benutzte Nickelschicht dient außerdem als elektrischer Leiter zur Stromabfuhr von der Kathodenelektrode in eine Leiterbahn zum elektrischen Verbinden mit anderen Brennstoffzellen. Es wird ein großflächiger Kontakt zwischen der Kathode und der als Stromabgriff dienenden Leiterbahn erzielt. Die inneren elektrischen Widerstände der Anordnung sind besonders gering. Es ist grundsätzlich nur ein einziger Siebdruckschritt erforderlich. Ein zusätzlicher Aufwand zur Herstellung der elektrischen Verschaltung der Brennstoffzellen ist vermieden. Die mechanische Haftung der Brennstoffzellen über die Nickelschicht auf dem Träger ist besonders gut.

Weitere Vorteile und Ausgestaltungsmöglichkeiten werden nachstehend anhand der Figur 1 erläutert.

Figur 1 zeigt eine nach dem erfindungsgemäßen Verfahren gebondete Brennstoffzellenanordnung 1 mit einer Brennstoffzelle 4, die mit einem keramischen Träger 2 verbunden ist. Die mechanische Verbindung zwischen dem Träger 2 und der Brennstoffzelle 4 ist durch eine Nickelschicht 91 hergestellt. Die Kathodenelektrode 6 der Brennstoffzelle 4 bzw. die Verbindungsstelle zwischen Kathode 6 und Nickelschicht 91 ist durch einen Nickelrand 151 vor einem Eindringen von Wasserstoff geschützt. Der Nickelrand 151 verringert auch die mit Wasserstoff in Kontakt stehende Oberfläche der Nickelschicht 91. Da der Nickelrand 151 direkt mit der Kathode 6 in Berührung gebracht werden darf, kann die Kathodenelektrode 6 großflächiger ausgeführt werden als bei der Anordnung gemäß Figur 2, nämlich gleich groß wie der scheibenförmige Elektrolyt 7, der z.B. aus Yttrium-stabilisiertem Zirkonoxid besteht. Damit wird ein vorteilhaft guter elektrischer Kontakt über eine große Fläche zwischen der Kathodenelektrode 6 und der als Stromabgriff wirkenden Nickelschicht 91 erreicht.

Die Nickelschicht 91 steht mit der Kathode 6 über einen relativ breiten Überlappungsbereich, d.h. einen z.B. bis zu 3mm breiten Randbereich in Kontakt. Bei einer solchen Überlappung stellt sich in Abhängigkeit vom Sauerstoffpartialdruck-Gradienten über die Kontaktstrecke ein stationärer Zustand ein, indem elementares Nickel an noch nicht reduzierten Perowskit grenzt. Die Nickelschicht 91 wird nämlich normalerweise von dem Sauerstoff der Luft bei der hohen Betriebstemperatur angegriffen. Dem wirkt entgegen, daß die Nickelschicht 91 von der Brenngasseite her mit wasserstoffhaltigem Gas in Kontakt steht, wodurch Wasserstoff in die Nickelschicht 91 diffundiert und dadurch die Schicht vor Korrosion durch Sauerstoff schützt.

Der erforderliche Überlappungsbereich wird im Awendungsfall durch Versuche ermittelt, da ein zu großer Überlappungsbereich die wirksame, d.h. mit Luft in Kontakt stehende Fläche der Kathodenelektrode verringert.

In Figur 1 ist eine Brennstoffzellenanordnung mit einem keramischen Träger 2 dargestellt, der gasdicht gesintert ist und Kanäle 11 für den Durchtritt des Reaktionsgases, z.B. Luft, zur Kathode 6 hat. Die Anwendbarkeit des Bondverfahrens ist jedoch nicht auf gasdichte Träger beschränkt.

Die außerdem in Figur 1 gezeigte Verstärkerschicht 17 mit Zwischenräumen 19 zur Verbesserung der Leitfähigkeit der Kathodenelektrode 6 ist als vorteilhafte Ausgestaltung anzusehen.

Einzelheiten zur Arbeitsweise von Hochtemperaturbrennstoffzellenbatterien sind den eingangs genannten Druckschriften zu entnehmen, die außerdem weitere Angaben zu geeigneten Materialien für die einzelnen Komponenten enthalten. Es versteht sich, daß das Verbindungsverfahren auch für inverse Anordnungen verwendbar ist, bei denen über die Hohlräume 3 im Träger 2 ein wasserstoffhaltiges Brenngas der Kathode 6 zugeführt wird und an der Anode 8 ein sauerstoffhaltiges Gas vorbeigeleitet wird.

Das vorgeschlagene Verfahren zur Verbindung von Brennstoffzellen 4 mit einem Träger 2 über eine siebegedruckte Nickelschicht 91 kann dadurch ergänzt werden, daß gleichzeitig mit der Nickelschicht 91 eine Verstärkerschicht 17 aus z.B. einem Perowskit des Typs $LaMO_3$ mit $M = Mn,Cr$ mittels Siebdruck auf den Träger aufgebracht wird und anschließend die Brennstoffzellen auf die beiden noch grünen Schichten aufgelegt und durch Sintern mit der Kathode verbunden werden. Während des Sintervorgangs werden die Brennstoffzellen durch Auflegen eines Gewichts von z.B. 500g, bezogen auf eine Brennstoffzelle mit 4x4cm Fläche, belastet.

Verwendbar sind jedoch auch vorgefertigte Brennstoffzellen, die auf den Kathodenelektroden bereits eine Verstärkerschicht tragen, wobei die Verstärkerschicht den Träger nach dem Verbindungsvorgang nicht berühren muß.

**Patentansprüche**

1. Verfahren zur Herstellung einer gasdichten mechanischen Verbindung zwischen wenigstens einer vorgefertigten Brennstoffzelle, die eine Festelektrolytscheibe mit auf gegenüberliegenden Hauptflächen aufgebrachten Anoden- bzw. Kathoden-Elektroden aufweist, und einem keramischen Brennstoffzellenträger, auf dem wenigstens eine Brennstoffzelle angeordnet ist, gekennzeichnet durch nachstehende Verfahrensschritte:

a) Aufbringen einer z.B. rahmenförmig strukturierten Nickelschicht (91) auf den Brennstoffzellenträger (2) mittels Siebdruck, wobei die Nickelschicht (91) als Mittel zur mechanischen Verbindung der Brennstoffzelle (4) mit dem Träger (2) sowie zum Stromabgriff von der Kathodenelektrode (6) und als Stromanschluß für eine elektrische Verschaltung mit weiteren Brennstoffzellen (4) vorgesehen ist,

b) Auflegen der Brennstoffzelle (4) auf die frischgedruckte Nickelschicht (91) und

c) Sintern dieser Anordnung unter Aufbringung eines geringen mechanischen Drucks auf die Brennstoffzelle (4), wobei zunächst etwa 1 Stunde lang in Luft bei einer Temperatur von etwa 400°C und anschließend in einer Stickstoffatmosphäre bei einer Temperatur von etwa 1150°C gesintert wird.

2. Verfahren nach Anspruch 1, dadurch gekennzeichnet, daß vorgefertigte Brennstoffzellen (4) verwendet werden, deren Kathodenelektrode (6) die Elektrolytscheibe (7) auf einer Hauptfläche ganzflächig bedeckt.

3. Verfahren nach Anspruch 1 oder 2, dadurch gekennzeichnet, daß die Elektrolytscheibe (7) und die Kathodenelektrode (6) der Brennstoffzelle (4) in einem weiteren Fertigungsschritt am Rand mit einer Dichtungsschicht (151) aus Nickel abgedeckt wird.

4. Verfahren nach einem der vorstehenden Ansprüche, dadurch gekennzeichnet, daß Brennstoffzellen (4) verwendet werden, die auf der Kathodenelektrode (6) eine Verstärkerschicht (17) aus einem Perowskit z.B. des Typs LaMnO$_3$ mit M = Mn,Cr zur Verbesserung der Leitfähigkeit tragen.

5. Verfahren nach einem der Ansprüche 1 bis 3, dadurch gekennzeichnet, daß im Verfahrensschritt a) außer der Nickelschicht (91) eine Verstärkerschicht (17) aus einem Perowskit z.B. des Typs LaMO$_3$ mit M = Mn,Cr mittels Siebdruck auf den Träger (2) aufgebracht wird und daß im Verfahrensschritt c) beide Schichten (91,17) durch Sintern mit der Kathodenelektrode (6) verbunden werden.

6. Verfahren nach einem der vorstehenden Ansprüche, dadurch gekennzeichnet, daß ein keramischer Brennstoffzellenträger (2) verwendet wird, der gasdicht hergestellt ist und in einem Bereich, der von der Kathodenelektrode (6) bedeckt ist, Kanäle (11) zur Gaszufuhr, z.B. Luftzufuhr, aufweist.

7. Verfahren nach einem der vorstehenden Ansprüche, dadurch gekennzeichnet, daß die Nickelschicht (91) so breit ausgeführt ist, daß sie die Kathodenelektrode (6) in einem bis zu 3mm breiten Randbereich überdeckt.

8. Verfahren nach einem der vorstehenden Ansprüche, dadurch gekennzeichnet, daß der mechanische Druck auf die Brennstoffzellen während des Sinterns durch ein Gewicht von etwa 500g, bezogen auf eine Brennstoffzellenfläche von 16cm$^2$, erzeugt wird.

EP 0 512 383 A1

## Fig.1

## Fig.2

5

Europäisches
Patentamt

**EUROPÄISCHER RECHERCHENBERICHT**

Nummer der Anmeldung

EP    92 10 7271

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-4 033 284 (ASEA BROWN BOVERI AG) <br> * Seite 3, Zeile 50 - Zeile 56 * <br> * Seite 3, Zeile 62 - Zeile 66; Abbildung 8 * <br> * Ansprüche 2,4 * <br> --- | | H01M8/24 <br> H01M8/12 |
| P,A <br><br> D | EP-A-0 452 737 (ABB PATENT GMBH) <br> * Ansprüche 8,10 * <br> & DE -A - 4011506 <br> --- | 1 | |
| A | PATENT ABSTRACTS OF JAPAN <br> vol. 12, no. 328 (E-654)(3175) 6. September 1988 <br> & JP-A-63 091 957 ( MITSUBISHI HEAVY IND LTD ) <br> 22. April 1988 <br> * Zusammenfassung * <br><br> ----- | | |

**RECHERCHIERTE SACHGEBIETE (Int. Cl.5 )**

H01M

Der vorliegende Recherchenbericht wurde für alle Patentansprüche erstellt

| Recherchenort | Abschlußdatum der Recherche | Prüfer |
|---|---|---|
| DEN HAAG | 18 AUGUST 1992 | D'HONDT J.W. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.....................................................................................
& : Mitglied der gleichen Patentfamilie, übereinstimmendes
    Dokument

EPO FORM 1503 03.82 (P0403)